# EUROPÄISCHE PATENTSCHRIFT

(11) **EP 3 497 734 B1**
(45) Veröffentlichungstag und Bekanntmachung des Hinweises auf die Patenterteilung: **03.06.2020**
(21) Anmeldenummer: 17751611.9
(22) Anmeldetag: 04.08.2017
(51) Int. Cl.: H01M 2/10, H01M 2/34, H01M 10/48, H02J 3/32, H02J 3/38, H02J 7/35

(54) **BATTERIESPEICHERSYSTEM ZUR SPEICHERUNG VON ELEKTRISCHER ENERGIE UND VERFAHREN**
BATTERY STORAGE SYSTEM FOR STORING ELECTRICAL ENERGY AND METHOD
SYSTÈME DE STOCKAGE PAR BATTERIE DESTINÉ AU STOCKAGE D'ÉNERGIE ÉLECTRIQUE ET PROCÉDÉ

(30) Priorität: 12.08.2016 DE 102016215122; 25.08.2016 DE 102016010164; 02.11.2016 DE 102016013048; 03.02.2017 DE 102017000485
(43) Veröffentlichungstag der Anmeldung: 19.06.2019
(73) Patentinhaber: Adensis GmbH, 01129 Dresden (DE)
(72) Erfinder: BECK, Bernhard, 97332 Volkach-Dimbach (DE); FALLANT, Lars, 01069 Dresden (DE)
(74) Vertreter: Pfeffer, Michael
(86) Internationale Anmeldenummer: PCT/EP2017/000956
(87) Internationale Veröffentlichungsnummer: WO 2018/028827

(56) Entgegenhaltungen:
- EP-A1- 2 432 068
- CN-U- 203 084 169
- DE-A1-102014 200 640
- US-A- 5 703 468
- US-A1- 2016 233 481

## Beschreibung

Die Erfindung betrifft ein Batteriespeichersystem zur Speicherung von elektrischer Energie, insbesondere für Photovoltaik-Anlagen, mit einem zwischen zwei Anschlüssen geführten Gleichspannungskreis mit einem Speicherstrang. Die Erfindung bezieht sich ebenfalls auf ein Batteriespeichermodul.

Batteriespeichersysteme, z.B. in Form von Niedergleichspannungssystemen, werden heutzutage beispielsweise als dezentrale Energiespeichersysteme (Kleinspeichersystem) für Windkraft- oder Photovoltaik-Anlagen eingesetzt. Unter einer Niedergleichspannung ist in diesem Zusammenhang insbesondere ein (Gleich-)Spannungsbereich zwischen -1500 V (DC) bis +1500 V (DC) zu verstehen.

Derartige Batteriespeichersysteme weisen im Vergleich zu anderen Speichertechnologien, wie beispielsweise Pumpenspeicherkraftwerken, aufgrund von fehlenden mechanischen Bauteilen eine besonders geringe Einschaltzeit auf. Des Weiteren weisen Batteriespeichersysteme einen geringen Bauraumbedarf auf und sind ortsunabhängig einsetzbar. Dadurch sind Batteriespeichersysteme auch als Energiespeicher für Photovoltaik-Anlagen in Privathaushalten geeignet.

Heutzutage werden vermehrt elektrochemische Speichermodule (Speicherzelle, Batterie, Akkumulator) in einer Wiederverwendung oder Zweitverwendung (Second Life) eingesetzt. Unter einer Zweitverwendung ist hierbei insbesondere der Einsatz von Speichermodulen zu verstehen, welche bereits in einer vorherigen (andersartigen) Anwendung eingesetzt wurden. So sind beispielsweise Speichermodule von elektrisch betriebenen Kraftfahrzeugen, insbesondere Elektro- oder Hybridfahrzeugen, bei einer Restkapazität von 70 - 80 % austauschpflichtig. Für diese gebrauchten beziehungsweise ausgetauschten Speichermodule ist jedoch eine Weiternutzung (Rekonditionierung) in geeigneten Anwendungen möglich, in denen die Speichermodule mit geringeren Raten geladen und/oder entladen werden. Dadurch werden einerseits der Recyclingprozess der Speichermodule verzögert und andererseits kostengünstige Speichermodule beispielsweise für den Einsatz in einem Batteriespeichersystem bereitgestellt. Das Dokument DE 10 2014 200640 A1 beschreibt ein Batteriesystem und Verfahren zur Trennung eines Batteriesystems von einem angeschlossenen elektrischen Verbraucher.

Bei einem Batteriespeichersystem ist es notwendig, dass die einzelnen Komponenten, wie beispielsweise Wechselrichter, Transformatoren oder die Speichermodule, derart dimensioniert sind, dass das Gesamtsystem die gewünschte Leistung erzeugt und gleichzeitig die geforderten Sicherheitsbedingungen erfüllt. Bei einem Einsatz von Speichermodulen in Zweitverwendung tritt hierbei das Problem auf, dass derartige Speichermodule in der Regel nicht für die Anwendung im zu realisierenden Batteriespeichersystem ausgeführt sind.

Der Erfindung liegt die Aufgabe zugrunde ein besonders geeignetes Batteriespeichersystem zur Speicherung von elektrischer Energie anzugeben, welches insbesondere möglichst kostengünstig herstellbar ist. Der Erfindung liegt weiterhin die Aufgabe zugrunde, ein geeignetes Batteriespeichermodul zur Verwendung in einem derartigen Batteriespeichersystem anzugeben.
Die Aufgabe wird mit den Merkmalen des Anspruchs 1 erfindungsgemäß gelöst. Die Aufgabe wird hinsichtlich des Batteriespeichermoduls mit den Merkmalen des Anspruchs 12 gelöst.
Vorteilhafte Ausgestaltungen und Weiterbildungen sind Gegenstand der jeweiligen Unteransprüche.

Das erfindungsgemäße Batteriespeichersystem (Niederspannungssystem, Kleinspeichersystem) ist zur Speicherung von elektrischer Energie, insbesondere für eine Anwendung in einer Photovoltaik-Anlage, geeignet, vorgesehen und/oder eingerichtet. Zum Zwecke einer elektrischen Kontaktierung sind zwei Anschlüsse vorgesehen, mit welchen das Batteriespeichersystem beispielsweise an einen Photovoltaikgenerator koppelbar ist. Zwischen den Anschlüssen ist ein Gleichspannungskreis geführt. Das Batteriespeichersystem ist mit den Anschlüssen beispielsweise ebenso an einen Stromrichter (Wechselrichter, Gleichrichter) oder an eine weitere Gleichspannungsquelle kontaktierbar. Der Gleichspannungskreis weist einen Pluspfad und einen Minuspfad auf, zwischen welchen im Betrieb eine Betriebsspannung im Niedergleichspannungsbereich zwischen -1500 V (DC) und +1500 V (DC) anliegt.

Der Gleichspannungskreis weist einen modular aufgebauten Speicherstrang auf, welcher eine Anzahl von elektrochemischen Speichermodulen (Speicherzelle, Gleichspannungsquelle, Speicherzelle, Batterie, Akkumulator), im Nachfolgenden als Speichermodule bezeichnet, in einer Reihen- beziehungsweise Serienschaltung umfasst. In der Reihenschaltung werden die Teilspannungen der einzelnen Speichermodule zu der Betriebsspannung aufsummiert. Die einzelnen Energiespeicher sind hierbei vorzugsweise für geringere Spannungen als die Betriebsspannung im gemeinsamen Niederspannungssystem ausgelegt. Dadurch ist es möglich, vergleichsweise kostengünstige Speichermodule zu verwenden, welche einzeln lediglich einen Teil zu der Betriebsspannung beitragen. Die Speichermodule weisen hierbei jeweils insbesondere ein eigenes, separates Gehäuse auf. Die Gehäuse der einzelnen Speichermodule des Speicherstrangs sind zueinander mechanisch beabstandet, das bedeutet voneinander getrennt. Jeder Speicherstrang weist mindestens zwei, fünf oder zehn Speichermodule in Reihenschaltung auf. Insbesondere ist die Anzahl der Speichermodule je Speicherstrang kleiner 100, 80 oder 50. Geeigneterweise ist die Anzahl der Speichermodule in einem Speicherstrang zwischen 5 Speichermodulen und 90 Speichermodulen, zwischen 10 Speichermodulen und 70 Speichermodulen oder zwischen 20 Speichermodulen und 50 Speichermodulen. Beispielsweise sind die Speichermodule zueinander baugleich. Zumindest sind insbesondere jedoch sämtliche Speichermodule eines der Speicherstränge, insbesondere jedes Speicherstrangs baugleich. Die Speichermodule basieren beispielsweise auf einer Lithium-Ionen-Technologie.

In einer besonders kostengünstigen Weiterbildung ist mindestens ein Speichermodul des Speicherstrangs ein Speichermodul in einer Zweitverwendung (Second Life). Mit anderen Worten wurde mindestens ein Speichermodul aus einem früheren Anwendungsbereich für das Batteriespeichersystem rekonditioniert. Dies bedeutet, dass das Speichermodul in dessen Erstverwendung (First Life) beispielsweise als ein Notstrom- oder Stationärspeicher oder als eine Energieversorgung eines elektromotorischen Antriebs eines Kraftfahrzeugs eingesetzt wurde. Insbesondere ist der elektromotorische Antrieb des Kraftfahrzeugs ein Hauptantrieb des Kraftfahrzeugs. Mit anderen Worten handelt es sich bei diesen Speichermodulen um Hochvoltenergiespeicher des Kraftfahrzeugs. In einer möglichen Weiterbildungsform sind insbesondere sämtliche Speichermodule des Batteriespeichersystems als Speichermodule in einer Zweitverwendung ausgeführt. Zweckmäßigerweise sind sämtliche Speichermodule eines der Speicherstränge als Speichermodule in einer Zweitverwendung ausgeführt.

Zur Verbesserung der Ladekapazität des Batteriespeichersystems werden in einer vorteilhaften Ausführung mehrere Speicherstränge in dem Gleichspannungskreis parallel geschaltet, wodurch die Leistungsfähigkeit sowie die Lebensdauer des Batteriespeichersystems verbessert werden. Beispielsweise beträgt die Anzahl der Speicherstränge mindestens zwei, fünf oder zehn, insbesondere ist die Anzahl der Speicherstränge kleiner 100, 80 oder 50. Geeigneterweise ist die Anzahl der Speichersträngen zwischen 5 Speichersträngen und 90 Speichersträngen, zwischen 10 Speichersträngen und 70 Speichersträngen oder zwischen 20 Speichersträngen und 50 Speichersträngen. Beispielsweise sind die Speicherstränge zueinander baugleich.

In einer zweckmäßigen Ausgestaltung ist ein Schutzschalter in den Speicherstrang geschaltet. Mit anderen Worten ist der Schutzschalter in einer Reihenschaltung zu den in Reihe geschalteten Speichermodulen verschaltet. Der Schutzschalter ist für das sichere Schalten der zu beherrschenden Niedergleichspannung beziehungsweise der dadurch auftretenden Gleichströme geeignet und eingerichtet. Alternativ ist eine Schmelzsicherung vorgesehen, sodass in einem Fehler- oder Störfall eine sichere Abschaltung beziehungsweise galvanische Trennung des Speicherstrangs erfolgt. In einer möglichen Ausgestaltungsform ist es beispielsweise denkbar, jedem Speichermodul einen separaten Schutzschalter zur Absicherung zuzuordnen.

In einer betriebssicheren Ausgestaltung ist es vorgesehen, dass der Speicherstrang mindestens eine Kontaktstelle aufweist, an welcher über einen hochohmigen Widerstand ein Bezugspotential angeschlossen ist. Das Bezugspotential ist hierbei insbesondere ein Masse- oder Erdpotential (Masse beziehungsweise Erde), beispielsweise ein geerdetes Gehäuse des Batteriespeichersystems. Unter hochohmig ist insbesondere ein möglichst hoher elektrischer Widerstandswert des Widerstands zu verstehen, sodass der Speicherstrang möglichst stromlos an das Bezugspotential geführt ist. Der Widerstand wirkt somit als Isolationswiderstand zur hochohmigen Kontaktierung und Festlegung eines Erdungspunktes (Harterdung) mit dem Bezugspotential. Dadurch ist eine besonders sichere Kontaktierung an das Bezugspotential gewährleistet.

Insbesondere bei einer Reihenschaltung von Speichermodulen mit mindestens einem Speichermodul in Zweitverwendung besteht hierbei eine Gefahr, dass beispielsweise aufgrund zu geringer Luft- oder Kriechstrecken oder zu geringer Isolationsdimensionierungen, die erzeugte Spannung gegenüber geerdeten Komponenten (Gehäuse, Aktoren, Sensoren, Kommunikationssysteme) zu hoch wird, sodass die dadurch erzeugten erhöhten Energieeinflüsse nicht beherrschbar sind. Dadurch ist es möglich, dass es zu Beschädigungen oder Zerstörung der beteiligten Speichermodule und/oder Komponenten kommt. Durch die hochohmige Kontaktierung an das Bezugspotential werden Beschädigungen und/oder Zerstörungen der Speichermodule und/oder von weiteren Komponenten (Aktoren, Sensoren, Kommunikationssystemen) des Batteriespeichersystems vorteilhaft und einfach vermieden, da an jedem einzelnen Speichermodul lediglich dessen zulässige (Teil-)Spannung abfällt.

Durch den Anschluss an das Bezugspotential wird somit die gesamte (Betriebs-) Spannung des Batteriespeichersystems auf die in Reihe geschalteten Speichermodule aufgeteilt. Durch die Führung gegen das Bezugspotential wird vorteilhaft und einfach ein betriebssicherer Einsatz von Speichermodule, insbesondere in Zweitverwendung, für die Anwendung in dem Batteriespeichersystem ermöglicht. Dies überträgt sich in der Folge besonders vorteilhaft auf die Herstellungskosten des Batteriespeichersystems.

In einer geeigneten Weiterbildung ist die Kontaktstelle zwischen zwei benachbarten Speichermodulen des Speicherstrangs angeordnet. In einer zusätzlichen oder alternativen Weiterbildungsform ist es beispielsweise ebenso denkbar die Kontaktstelle an den Plus- oder Minuspfad des Gleichspannungskreises zu führen und/oder mehrere Kontaktstellen an unterschiedlichen Positionen im Speicherstrang vorzusehen. Dadurch wird die Betriebssicherheit des Batteriespeichersystems verbessert.

In einer zweckmäßigen Ausführung ist dem Widerstand ein (elektrischer) Spannungsmesser parallel geschaltet, mit welchem bei Betrieb die abfallende elektrische Spannung am Widerstand erfasst wird. Insbesondere wird bei Betrieb das Nullpunkt- oder Bezugspotential kontinuierlich mit dem Spannungsmesser überwacht. Geeigneterweise wird mittels des Spannungsmessers das elektrische Potential der Kontaktstelle gegenüber dem Bezugspotential überwacht. Dadurch ist ein Stör- oder Fehlerfall des Speicherstranges einfach und schnell mittels einer Potentialverschiebung detektierbar.

In einer bau- und schaltteilreduzierten Ausbildung ist der Widerstand insbesondere in dem zugeordneten Spannungsmesser integriert. Dies bedeutet, dass der Isolationswiderstand gleichzeitig als Messwiderstand des Spannungsmessers wirkt.

Ein weiterer oder zusätzlicher Aspekt der Erfindung sieht vor, dass eine steuerbare Energiequelle (Energieregelquelle) in Form eines Strom- oder Spannungsquellenreglers zwischen dem Speicherstrang und dem Bezugspotential, insbesondere parallel zu dem Widerstand, geschaltet ist. Beispielsweise ist die Energiequelle ein Umrichter oder eine Batterie. Mittels der Energiequelle ist elektrische Energie bereitgestellt, wobei die Einleitung in den Speicherstrang steuerbar, insbesondere regelbar, ist, insbesondere mittels eines Schalters und/oder eines Potentiometers oder einer PWM-Ansteuerung (pulsweitenmoduliert) des Schalters. Dadurch ist ein verbesserter Betrieb des Niedergleichspannungssystems realisiert.

Vorzugsweise weist die Energiequelle eine größere elektrische Spannung als die im Normalbetrieb zwischen der Kontaktstelle und dem Bezugspotential anliegende Spannung auf. Zweckmäßigerweise ist diese Spannung um mindestens 10%, 20% oder 30% größer dimensioniert, sodass ein zuverlässiges Einleiten der Spannung im Bedarfsfall sichergestellt ist.

Das erfindungsgemäße Verfahren zum Betreiben des Batteriespeichersystems sieht hierbei vor, dass ein von dem Spannungsmesser erfasster Spannungsabfall (Spannungswert) mit einem Schwellwert verglichen wird, und dass in Abhängigkeit des Vergleichs die Energiequelle angesteuert wird. Die Energiequelle wird hierbei insbesondere derart angesteuert oder geregelt, dass der erfasste Spannungsabfall auf einen dem Schwellwert gegenüber reduzierten Wert eingestellt wird. Dadurch ist es in einfacher Art und Weise möglich, eine mit dem Spannungsmesser detektierte Potentialverschiebung durch die Ansteuerung der (aktiven) Energiequelle auszugleichen.

In einer geeigneten Weiterbildungsform weist das Batteriespeichersystem hierbei einen Controller, das bedeutet ein Steuergerät, auf. Der Controller ist hierbei allgemein - programm- und/oder schaltungstechnisch - zur Durchführung des vorstehend beschriebenen Verfahrens geeignet und eingerichtet. Der Controller ist somit konkret dazu eingerichtet, während des Betriebs den von dem Spannungsmesser erfassten Spannungsabfall mit einem Schwellwert zu vergleichen, und in Abhängigkeit des Vergleichs die Energiequelle derart anzusteuern beziehungsweise einzustellen, dass die Abweichung zum Schwellwert reduziert wird.

In bevorzugter Ausgestaltung ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Benutzer - bei Ausführung der Betriebssoftware in dem Mikrocontroller automatisch durchgeführt wird.

Der Controller kann im Rahmen der Erfindung alternativ auch durch ein nicht programmierbares elektronisches Bauteil, zum Beispiel einem ASIC (anwendungsspezifischer integrierter Schaltkreis), gebildet sein, in dem die Funktionalität zur Durchführung des Verfahrens mit schaltungstechnischen Mitteln implementiert ist.

In einer bevorzugten Anwendung ist das Batteriespeichersystem als dezentrales Speichersystem in einer Photovoltaik-Anlage eingesetzt. Die Photovoltaik-Anlage oder Solaranlage weist einen Photovoltaikgenerator auf, welcher seinerseits aus gruppierten, zu Teilgeneratoren zusammengefassten, Photovoltaikmodulen besteht. Die Photovoltaikmodule sind in Reihe geschaltet und/oder liegen - ähnlich zu den Speichermodulen - in parallelen Strängen vor. Das Batteriespeichersystem ist zur Speicherung der durch die Photovoltaikmodule erzeugten Energie mittels der Anschlüsse an den Photovoltaikgenerator gekoppelt. Dadurch ist ein besonders betriebssicheres, zuverlässiges und kostengünstiges Speichersystem bereitgestellt.

Die erfindungsgemäße Verwendung sieht vor, dass elektrochemische Speichermodule in Zweitverwendung oder Weiterverwendung für die Herstellung eines vorstehend beschriebenen Batteriespeichersystems, insbesondere eines hierfür geeigneten Speicherstrangs, verwendet werden.

Insbesondere im KFZ-Bereich wird ein Speichermodul auch als Batteriepack und ein Speicherelement auch als Batteriezelle bezeichnet. Ein Speichermodul setzt sich aus mehreren Speicherelementen zusammen. Gleichermaßen beinhaltet ein Batteriepack mehrere Batteriezellen.

Im Zusammenhang mit der Erfindung ist zusätzlich folgendes auszuführen:
In der KFZ Branche bringt es die schnell fortschreitende Technologieentwicklung von Elektrofahrzeugen mit sich, dass ein Fokus auf die Speicherkapazität der im Fahrzeug mitgeführten Batteriepacks gerichtet ist. Ein Batteriepack ist in der Regel ein Metallgehäuse, welches im Inneren eine Vielzahl von elektrischen Speicherelementen aufweist. Als Speicherelemente können Bleigelakkus, Lithiumionenakkus, usw. verwendet werden. Die Speicherelemente sind im Inneren des Batteriepacks in Serie und ggf. auch noch parallel verschaltet, wobei außen an dem Gehäuse Anschlüsse herausgeführt sind, um den Batteriepack anzuschließen. Solche Batteriepacks besitzen zur Zeit über die Serienschaltung der Speicherelemente eine Spannung von bis zu 600 Volt an den äußeren Anschlüssen.

Aufgrund der rasanten technischen Entwicklung entsteht eine Situation, dass vor wenigen Jahren hergestellte und verbaute Batteriepacks den heutigen Anforderungen an die Reichweite nicht mehr genügen. Manche Hersteller bieten ihren Kunden folgerichtig an, die ursprünglichen Batteriepacks gegen moderne Versionen auszutauschen. Bereits hergestellte und noch nicht verbaute ältere Batteriepacks sind obsolet und müssten eigentlich, wie auch die ausgetauschten, anderweitig verwendet oder entsorgt werden.

Auf diese Weise entstehen Tausende von Tonnen an nicht mehr benötigten Batteriepacks, für die keine sinnvolle Verwendung mehr besteht.

Es ist die Aufgabe vorliegender Erfindung, eine Technologie bereitzustellen, die den Einsatz auch ge- oder veralteten Batteriepacks ermöglicht und dabei einem Speicherproblem auf einem anderen technischen Gebiet, nämlich der Photovoltaik und Windkrafterzeugung, abzuhelfen. Dort besteht das Problem, dass Spitzen in der Stromerzeugung nicht unbedingt dann anfallen, wenn die Energie auch benötigt wird. Es ist also eine Zwischenspeicherung der elektrischen Energie vorteilhaft. Einem simplen Einsatz der nicht mehr benötigten Batterie mittels vorhandener kostengünstiger Solartechnik steht der Umstand entgegen, dass dort mit deutlich höheren Spannungen als die zulässige Höchstspannung der Batteriepacks für die KFZ Industrie gearbeitet wird.

Vorliegende Erfindung stellt eine Maßnahme bereit, um die Batteriepacks geringerer Spannung (z.B. bis 600 Volt) auch für den Einsatz in Systemen mit höherer Spannung (z.B. von 1000 oder 1500 Volt) verwenden zu können, ohne einen Durchschlag der Speicherelemente zum metallischen Gehäuse befürchten zu müssen.

Die Aufgabe wird erfindungsgemäß dadurch gelöst, dass der Speicherstrang mehrere Batteriemodule, die in Serie verschaltet sind, beinhaltet, von denen jedes
- eine Nennkapazität von mindestens 10 kWh aufweist;
- ein äußeres Metallgehäuse hat, aus dem ein Plusanschlusspol und ein Minusanschlusspol zum Anschluss des Speichermoduls herausgeführt sind;
- zwischen den Batteriezellen und dem Plusanschlusspol einen plusseitigen Trennschalter oder eine plusseitige Sicherung aufweist und zwischen den Batteriezellen und dem Minusanschlusspol einen minusseitigen Trennschalter oder eine minusseitige Sicherung aufweist; und
- eine Datenerfassungseinrichtung zur Registrierung von mindestens einer Temperatur im Inneren des Metallgehäuses und zur Messung von mindestens einer Spannung an mindestens einer vorbestimmten Stelle in dem Speichermodul aufweist, und die gewonnenen Temperatur- und Spannungsdaten zur Auswertung bereitstellt.

Vorteil dieser Vorgehensweise ist es, höhere Leistungen bei gleicher Stromstärke des Speichermoduls durch die Verschaltung mehrerer Einheiten dem Wechselrichter bereitzustellen. Damit geht ein entsprechendes Kostensenkungspotential einher. Die Trennschalter und Sicherungen bewirken einen sicheren Anlagenbetrieb. Die Datenerfassung von einer Temperatur und einer Spannung im Inneren des Metallgehäuses erlauben es, bei zu hohen Temperaturen und zu hohen Spannungen der Batteriezellen gegenüber dem Metallgehäuse Gegenmaßnahmen einzuleiten. Dieses kann z.B. eine Reduktion der Leistungsabnahme durch den Wechselrichter sein, die Einleitung einer Lüftungsmaßnahme wie die Zuschaltung eines Ventilators, oder das Kühlen mittels eines Fluides von geringer Temperatur. Bei zu niedrigen gemessenen Temperaturen ist es sinnvoll, die Speichermodule aktiv anzuheizen, um ihre Leistungsfähigkeit und Kapazität zu erhalten.

Eine andere vorteilhafte Variante sieht vor, dass die vorbestimmte Stelle an dem Plus und/oder an dem Minusanschlusspol des Speichermoduls oder an der elektrischen Verbindung zwischen zwei Batteriezellen liegt. Die Messung der Spannung an der vorbestimmten Stelle erlaubt es sicherzustellen, dass das Speichermodul innerhalb seiner eigenen Spannungsgrenzen betrieben wird. Darüber hinaus erlaubt die Spannungsmessung an der vorbestimmten Stelle in Bezug zum Bezugspotential oder Erdpotential die Spannungsfestigkeit des Speichermoduls in Bezug auf seine Isolationsfestigkeit einzuhalten. Speziell durch diese einfache Maßnahme wird ein hohes Maß an Systemsicherheit erreicht.

Eine weitere Ausgestaltung sieht vor, dass von den Trennschaltern in den Speichermodulen der- oder diejenigen als erstes angesteuert werden, deren Potentialdifferenz zum Bezugspotential kleiner ist als die von anderen Trennschaltern im selben Serienstrang. Das bietet den Vorteil, die Belastung der Trennschalter beim Trennvorgang von Gleichstrom gering zu halten, weil die Schalterkontakte, wenn überhaupt, nur relativ kleine und schwache Lichtbögen ziehen. Die Lebensdauer der Trennschalter erhöht sich erheblich.

Wenn eine ungerade Anzahl an Speichermodulen pro Serienstrang verbaut ist, sollte der Trennschalter des mittleren Speichermoduls aktiviert werden, um die Lebenserwartung der drei Speichermodule mit ihren jeweiligen Trennschaltern zu erhöhen. Die Schalthäufigkeit des Trennschalters im mittleren Speichermodul wird aufgrund der geringen Kontaktbelastung in Kauf genommen.

Es ist von Vorteil, wenn parallel zu den in Serie geschalteten Speichermodulen ein Entlastungsstrang verschaltet ist, der mindestens eines der folgenden Bauelemente enthält: mehrere Batteriezellen, mehrere Kondensatoren, in Serie geschaltete Speichermodule, eine rotierende Masse, die z.B. elektromagnetisch an das elektrische System angebunden ist, wie ein Drehstromgenerator mit Gleichrichter. Der Entlastungsstrang bewirkt durch seine vorgebende Systemspannung eine Reduktion des beim Öffnen eines Trennschalters anliegenden Spannungspotentials und damit einhergehend dessen Belastung. Der Entlastungsstrang erhöht also weiterhin die Lebensdauer der Trennschalter.

Vorteilhaft ist es, wenn ein Bezugspotential, insbesondere ein Massepotential, direkt gegen eine zwischen zwei Speichermodulen angeordnete Kontaktstelle des Serienstrangs geführt ist. Dadurch wird zwar die Betriebssicherheit der Speichermodule bezüglich des Personenschutzes reduziert, jedoch erhöht sich die Betriebssicherheit des Speichermoduls in technischer Hinsicht.

Eine Ausgestaltung der Erfindung sieht weiterhin vor, dass ein Bezugspotential, insbesondere ein Massepotential, unter Zwischenschaltung einer Kleinspannungsquelle gegen eine zwischen zwei Speichermodulen angeordnete Kontaktstelle des Serienstrangs geführt ist. Diese Vorgehensweise erlaubt es, einen Mittelweg zwischen der Betriebssicherheit der Speichermodule und dem Personenschutz zu wählen. Durch die Kleinspannungsquelle wird der ansonsten maximal mögliche Stromfluss limitiert.

Die hier verwendete Kleinspannungsquelle zeichnet sich durch eine feste Quellenspannung aus. Insbesondere handelt es sich bei der Kleinspannungsquelle um eine Gleichspannungsquelle, wie z.B. eine Batterie, einen Akkumulator oder ein Netzgerät bzw. Netzteil, insbesondere um ein Schaltnetzteil.

Eine andere Ausgestaltung sieht vor, dass an beliebiger Stelle des Serienstrangs eine Spannungsquelle angeschlossen ist, die ihrerseits mit dem Bezugspotential verbunden ist. Diese Ausgestaltung weist einen höheren Aufwand als die zuvor beschriebene Ausführung auf, da die Spannungsquelle eine deutlich höhere Spannung bereitstellen muss. Andererseits bietet sich hinsichtlich der Anwendbarkeit die Möglichkeit eine beliebige Anzahl von zwei oder mehr Speichermodulen einzusetzen, und je nach Isolationsfestigkeit und Leckströmen einzelner Speichermodule das Potential des Speicherstrangs optimal einzustellen, um unter Einhaltung der Isolationsfestigkeit der einzelnen Speichermodule mit einem möglichst geringen Ausgleichsstrom seitens der Spannungsquelle auszukommen. Dieses Vorgehen führt zudem zu einem erhöhten Personenschutz.

Eine Variante sieht vor, dass zwischen dem Metallgehäuse und dem Bezugspotential, insbesondere dem Masse- oder Erdpotential, eine Spannungsquelle elektrisch angebunden ist, welche das Potential des Metallgehäuses um mehr als 100 Volt gegen das Bezugspotential verschiebt. Diese Maßnahme ist erforderlich, um bei Verschaltung mehrerer Batteriemodule in Serie, bei denen die Spannung über die Nennspannung und der damit einhergehenden Isolationsfestigkeit des einzelnen Batteriemoduls hinausgeht, einen Durchschlag zwischen den elektrisch leitenden Komponenten des Batteriemoduls und dem Gehäuse zu verhindern. Als Nachteil wird hierbei in Kauf genommen, dass solch beeinflusste Batteriemodule nicht mehr den Anforderungen des Berührungsschutzes entsprechen. Die Verschiebung des Potentials des Metallgehäuses zum Erdpotential erfolgt immer in der Art und Weise, dass sich ein geringeres Potential zwischen den elektrischen leitenden Komponenten des Batteriemodules und dem Metallgehäuse ausbildet.

Eine besonders vorteilhafte Ausführungsform sieht vor, dass im Falle eines Potentials des Gehäuses oberhalb des Bezugspotentials, zwischen dem Metallgehäuse und dem Plusanschlusspol oder einer Kontaktstelle derselben Spannung ein Widerstand elektrisch angebunden ist, welcher das Potential des Metallgehäuses gegenüber dem Bezugspotential dem Betrage nach anhebt. Der einhergehende Nachteil eines nichtberührungssicheren Systems wird inkaufgenommen, um ein in der Erstellung sehr günstiges und im Betrieb sehr robustes Speichersystem bereitzustellen. Gleiches gilt analog bei der Betrachtung des Minuspols. Beide Varianten können gleichzeitig eingesetzt werden.

Wenn der Widerstand in seinem Wert von einer Regeleinrichtung einstellbar ist, um die Spannung des Gehäuses zum Bezugspotential auf einen vorgebbaren Wert oder innerhalb eines vorgegebenen Bereichs einzustellen, führt dies zwar zu einem erhöhten Aufwand, hat jedoch zur Folge, dass die Spannung des Gehäuses zum Bezugspotential nur auf den, für die Einhaltung der Isolationsfestigkeit des jeweiligen Speichermoduls notwendigen Spannungsbetrages, angehoben oder abgesenkt werden kann. Eine geringere Spannung am Gehäuse weist den Vorteil einer verbesserten Personenschutzes auf.

Vorteilhaft ist es, wenn sich zwischen dem Neutralleiter bzw. N-Pol des Wechselrichters und dem Bezugspotential eine wechselstromseitige Kleinspannungsquelle oder ein elektrischer Widerstand befindet. Durch diese Maßnahme kann über ein Eingreifen auf der Wechselspannungsseite des Wechselrichters eine Beeinflussung des Potentials auf der Gleichstromseite der Anlage vorgenommen werden. Diese Beeinflussung ist nur dann möglich, wenn der Wechselrichter seinerseits mit einem netzseitigen Transformator verbunden ist. Hierzu sind auch Varianten denkbar, die jenseits der direkten N-Pol Beeinflussung, z.B. über weitere am System angeschlossene Wechselrichter, deren N-Pol oder deren Gleichstromseite jeweils das Potential des Systems verschieben können.

Weiterhin wird der registrierte und bereitgestellte Temperaturwert im Inneren des Metallgehäuses dazu herangezogen, das Innere des Speichermoduls durch eine aktive Maßnahme zu kühlen oder zu erwärmen. Batteriezellen weisen je nach Temperatur eine unterschiedliche Leistungsfähigkeit auf. Eine kühle Batterie hat geringere Leistungswerte als eine warme Batterie. Eine zu warme Batterie verschleißt dagegen sehr schnell. Durch das Kühlen und/oder Erwärmen kann die Batterie nach Leistung und Lebensdauer optimiert werden. Die Temperaturbeeinflussung kann z.B. über eine Maßnahme erfolgen, die eines der folgenden Merkmale aufweist: Betrieb eines Ventilators, Betrieb einer Pumpe, Ansteuern eines Ventils und/oder ein Speichervolumen für ein warmes oder kaltes Fluid.

Es ist eine Steuervorrichtung vorgesehen, die in Kenntnis der aktuellen und/oder prognostizierten Wechselrichterleistung die Maßnahme zur Kühlung oder Erwärmung einleitet, bevor der gemessene Temperaturwert dieses fordert.
Diese Ausführungsform bietet z.B. in folgender Situation Vorteile: Zur Lieferung einer bestimmten Leistung in das Netz ist es erforderlich, eine Gasturbine anzufahren. Deren Hochlaufverhalten ist bekannt und sieht nach 5 Minuten eine erste Leistungslieferung und nach 20 Minuten eine vollständige Leistungsbereitschaft vor. Der Batteriespeicher dient dazu, den im Hochlaufbetrieb von der Gasturbine nicht lieferbaren Energieanteil zu decken. Der zu liefernde Leistungsverlauf der Batterie ist damit prognostiziert. Das thermische Verhalten der Speichermodule, sowie deren Batteriezellen ist ebenfalls bekannt. Um die Batteriezellen vor thermischen Schäden zu schützen und gleichzeitig die Lieferung der benötigten (gasturbinenseitig nicht leiferbaren) Leistung sicherzustellen, kann es notwendig sein, bei einer mittleren vorherrschenden Speichermodultemperatur Kühlmaßnahmen vorab durchzuführen. "Vorab" bedeutet dabei bevor der gemessene, bzw. registrierte Temperaturwert dieses verlangt. Analog kann es bei sehr kalten Speichermodulen ratsam sein, diese anzuwärmen.

Der vom Batteriespeicher zu liefernde Leistungsverlauf kann weiterhin Erzeugungs- und/oder Verbrauchsdaten des elektrischen Netzes beinhalten. Insbesondere können in dem vom Batteriespeicher zu liefernden Leistungsverlauf prognostizierte Erzeugungsdaten von fluktuierend einspeisenden Erzeugern, wie beispielsweise Windkraft- oder Photovoltaikanlagen, berücksichtigt werden. Alternativ oder zusätzlich können für den vom Batteriespeicher zu liefernden Leistungsverlauf tatsächliche oder prognostizierte Wetterdaten berücksichtigt werden. Bei entsprechenden Wetterdaten handelt es sich insbesondere um solche Wetterdaten, die einen Einfluss auf die Stromerzeugung von fluktuierend einspeisenden Erzeugern haben können, wie z.B. Windgeschwindigkeitsdaten, Daten zur solaren Einstrahlung oder Bewölkungsdaten.

Grundsätzlich kann die prognostizierte Wechselrichterleistung in beliebigen Zeitabständen für beliebige Prognosezeiträume erstellt werden. In einer Ausführungsform kann eine Wechselrichterleistungsprognose in vorgebbaren Zeitabständen für mindestens einen vorgebbaren (zukünftigen) Zeitraum, beispielsweise 15 Minuten, erzeugt werden. Es sind auch deutlich kürzere Zeiträume möglich, z.B. im Bereich einiger Sekunden.

Vorzugsweise werden regelmäßig für verschiedene zukünftige Prognosezeiträume, wie den nächsten 0,25 h, 0,5 h, 1 h, 2h, 3 h, 4 h, 6 h, 8 h, 12 h und/oder 24 h, entsprechende Wechselrichterleistungsprognosen für zumindest einen Wechselrichter des Batteriespeichersystems erstellt.

Für die Erstellung der Prognose der Wechselrichterleistung können Prognoseparameter bzw. Lastflussparameter des Wechselstromnetzes berücksichtigt werden. Insbesondere kann die Steuervorrichtung datentechnisch mit einem Server verbunden sein, von dem entsprechende Prognoseparameter bereitgestellt werden.

Alternativ erfolgt die Prognostizierung der Wechselrichterleistung auf einem Server und der Steuervorrichtung werden über eine Datenverbindung (z.B. per WAN, Mobilfunk oder dergleichen) entsprechend anzufahrende Betriebspunkte des Batteriespeichersystems vom Server übermittelt.

Auch kann der Batteriespeicher zur Erbringung von Systemdienstleistungen wie Bereitstellung von Regelleistung, Schwarzstart- oder Inselfähigkeit verwendet werden. Eine solche Bereitstellung von Systemdienstleistungen kann insbesondere derart erfolgen, dass vorlaufend zur Bereitstellung solcher Systemdienstleistungen oder währenddessen Kühlmaßnahmen durchgeführt bzw. ausgelöst werden. Die Kühlmaßnahmen können insbesondere in Abhängigkeit von einer mittleren Speichermodultemperatur ausgelöst werden. "Vorab" bedeutet dabei bevor der gemessene bzw. registrierte Temperaturwert dieses verlangt.

Nachfolgend werden Ausführungsbeispiele der Erfindung anhand einer Zeichnung näher erläutert. Darin zeigen in vereinfachten Blockdarstellungen:
Fig. 1 eine Photovoltaik-Anlage mit einem Photovoltaikgenerator und mit einem damit gekoppelten Batteriespeichersystem,
Fig. 2 das Batteriespeichersystem mit einem Gleichspannungskreis mit einer Anzahl von parallel geschalteten Speichersträngen mit einer hochohmigen Kontaktierung an ein Bezugspotential,
Fig. 3 ein Speicherstrang mit zwei in Reihe geschalteten Speichermodulen, und mit einer zwischen diese angeordnete Kontaktstelle zur Verschaltung an einen mit dem Bezugspotential kontaktierten Widerstand,
Fig. 4 ein Speicherstrang mit zwei in Reihe geschalteten Speichermodulen, und mit einem gekoppelten Spannungsmesser,
Fig. 5 ein Speicherstrang mit zwei in Reihe geschalteten Speichermodulen, und mit zwei an den gegenüberliegenden Enden des Speicherstranges angeordneten Kontaktstellen mit jeweils einem geerdeten Widerstand,
Fig. 6 ein Speicherstrang mit zwei in Reihe geschalteten Speichermodulen, und mit einer plusseitigen Kontaktstelle mit einem Spannungsmesser,
Fig. 7 ein Speicherstrang mit zwei in Reihe geschalteten Speichermodulen, und mit einer minusseitigen Kontaktstelle mit einem Spannungsmesser,
Fig. 8 ein Speicherstrang mit einer Anzahl von in Reihe geschalteten Speichermodulen, und mit einem Spannungsmesser,
Fig. 9 ein Speicherstrang mit einer Anzahl von in Reihe geschalteten Speichermodulen, und mit drei entlang des Speicherstrangs verteilt angeordneten Kontaktstellen mit jeweils einem Widerstand, und
Fig. 10 ein Speicherstrang mit einer Anzahl von in Reihe geschalteten Speichermodulen, und mit zwei an den gegenüberliegenden Enden des Speicherstranges angeordneten Kontaktstellen zur Verschaltung an jeweils einen Widerstand.

Einander entsprechende Teile und Größen sind in allen Figuren stets mit den gleichen Bezugszeichen versehen.

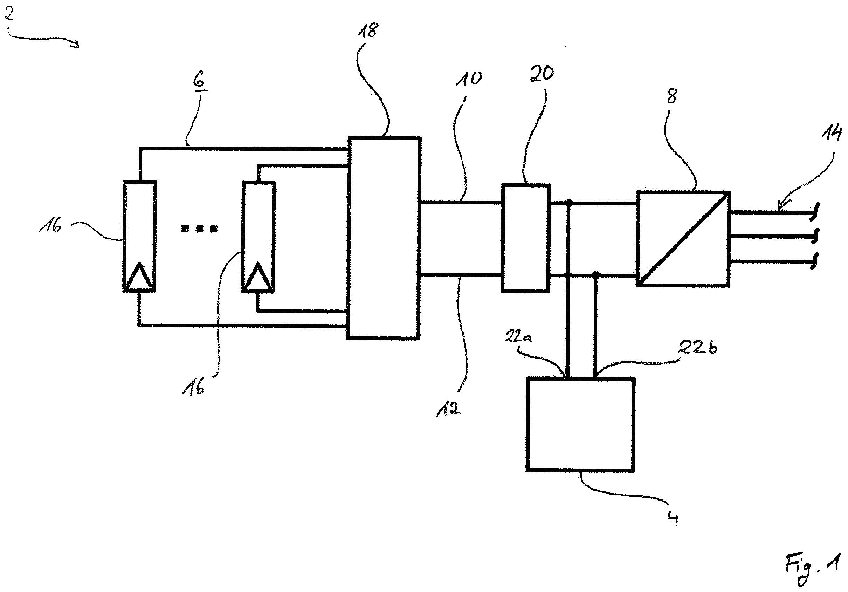

Die in der Fig. 1 dargestellte Photovoltaik-Anlage 2 umfasst ein Batteriespeichersystem 4 als dezentrales Speichersystem zur Speicherung von elektrischer Energie eines Photovoltaikgenerators 6. Das Batteriespeichersystem 4 ist hierzu zwischen dem Photovoltaikgenerator 6 und einem Wechselrichter 8 an einen Hauptpfad 10 und einen Rückführpfad 12 der Photovoltaik-Anlage 2 gekoppelt. Der Wechselrichter 8 ist ausgangsseitig an ein Netz 14 angeschlossen.

Der Photovoltaikgenerator 6 umfasst eine Anzahl von Photovoltaikmodulen 16, die zueinander parallel liegend an einen gemeinsamen Generatoranschlusskasten 18 geführt sind, der effektiv als Sammelpunkt dient. Zur Sicherung der Photovoltaik-Anlage 2 ist weiterhin ein galvanisches Trennelement 20 in den Hauptpfad 10 und den Rückführpfad 12 verschaltet. Der Photovoltaikgenerator 6 erzeugt im Betrieb eine Niedergleichspannung in einem Spannungsbereich zwischen -1500 V (DC) und +1500 V (DC), welche von dem Generatoranschlusskasten 18 dem vom Hauptpfad 10 und Rückführpfad 12 gebildeten Zwischenkreis zugeführt wird.

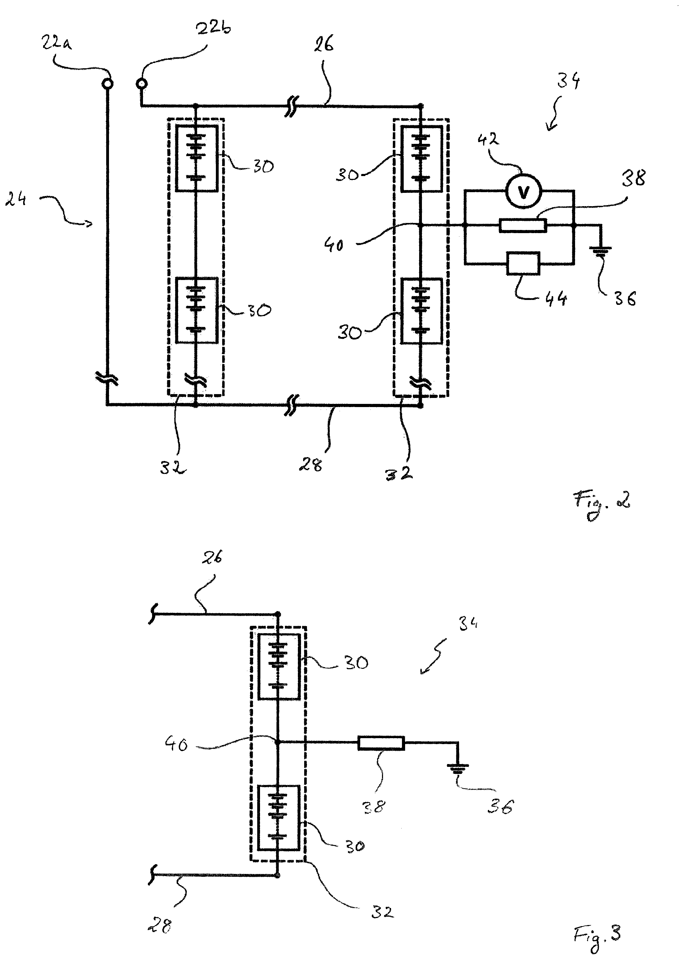

In der Fig. 2 ist das Batteriespeichersystem 4 dargestellt. Das Batteriespeichersystem 4 weist zwei Anschlüsse 22a und 22b auf, mit welchem das Batteriespeichersystem 4 an den Hauptpfad 10 beziehungsweise den Rückführpfad 12 kontaktierbar ist. Zwischen den Anschlüssen 22a und 22b ist ein Gleichspannungskreis 24 geführt. Der Gleichspannungskreis 24 umfasst einen Pluspfad 26 und einen Minuspfad 28. Das Batteriespeichersystem 4 umfasst weiterhin ein nicht näher dargestelltes Kühl- oder Lüftersystem.

Das Batteriespeichersystem 4 weist einen modularen Aufbau mit einer Anzahl von Speichermodulen 30 auf, welche in einer Reihen-Parallelschaltung zwischen dem Pluspfad 26 und dem Minuspfad 28 verschaltet sind. Eine Anzahl von in Reihe geschalteten Speichermodulen 30 ist hierbei als ein jeweiliger Speicherstrang 32 ausgeführt, wobei mehrere derartige Speicherstränge 32 parallel in dem Gleichspannungskreis 24 geschaltet sind.

In der Reihenschaltung der Speicherstränge 32 ist jeweils der Pluspol eines Speichermoduls 30 mit dem Minuspol des benachbarten Speichermoduls 30 kontaktiert, sodass sich die einzelnen Teilspannungen der Speichermodule 30 zu einer Betriebsspannung des Speicherstrangs 32, beziehungsweise des Gleichspannungskreises 24, aufsummieren. Die Betriebsspannung ist hierbei gleich der von dem Generatoranschlusskasten 18 erzeugten Niedergleichspannung. Vorzugsweise ist hierbei mindestens jeweils ein Speichermodul 30 des jeweiligen Speicherstrangs 32 ein Speichermodul 30 in einer Zweitverwendung (Second Life), beispielsweise in Form einer rekonditionierten Batterie oder eines rekonditionierten Akkumulators, beispielsweise ein rekonditionierter Hochvoltspeicher eines elektromotorischen Kraftfahrzeugs, eines Elektrokraftfahrzeugs oder eines Hybridkraftfahrzeugs.

Das Batteriespeichersystem 4 weist zum Schutz der Speicherstränge 32 ein Schutzsystem 34 auf, welches in der Fig. 2 beispielhaft mit einem Speicherstrang 32 gekoppelt ist. Das Schutzsystem 34 ist mit einem Bezugspotential 36, insbesondere einem Massen- oder Erdpotential, gekoppelt, und weist einen hochohmigen Widerstand 38 auf, mit welchem das Bezugspotential 36 an eine Kontaktstelle 40 des Speicherstrangs 32 geführt ist.

Durch die hochohmige Kontaktierung mittels des Widerstandes 38 wird ein Erdungspunkt des Speicherstrangs 32 festgelegt. Der Widerstand 38 wirkt hierbei als ein Isolationswiderstand zur möglichst stromlosen Anbindung an das Bezugspotential 36. Dadurch wird die gesamte (Betriebs-)Spannung des Gleichspannungskreises 24 auf die in Reihe geschalteten Speichermodule 30 aufgeteilt. Dadurch fällt an keinem Speichermodul 30 des Speicherstrangs 32 mehr als dessen zugelassene Modulbeziehungsweise Teilspannung ab.

Dem Widerstand 38 sind hierbei einerseits ein Spannungsmesser 42 sowie andererseits eine aktive, Steuer- oder regelbare Energiequelle (Energieregelquelle) 44, beispielsweise in Form eines Spannungsquellenreglers, parallel geschaltet. Der Spannungsmesser 42 erfasst im Betrieb die am Widerstand 38 abfallende Spannung und sendet diesen Wert an einen Controller der Energiequelle 44. Der Controller vergleicht den erfassten Spannungswert mit einem hinterlegten Schwellwert und steuert anhand des Vergleiches die Energiequelle 44 an. Die Spannungsmessung ermöglicht somit in einem Stör- oder Fehlerfall ein schnelles detektieren einer Potentialverschiebung, sodass die Potentialverschiebung durch die Ansteuerung der Energiequelle 44 ausregelbar ist.

Anhand der Figuren 3 bis 10 sind nachfolgend alternative Ausführungsbeispiele des Schutzsystems 34 näher erläutert.

In dem Ausführungsbeispiel der Fig. 3 weist das Schutzsystem 34 lediglich den Widerstand 38 auf. Der Widerstand 38 ist mittels der Kontaktstelle 40 mittig in einem zweimoduligen Speicherstrang 32 kontaktiert.

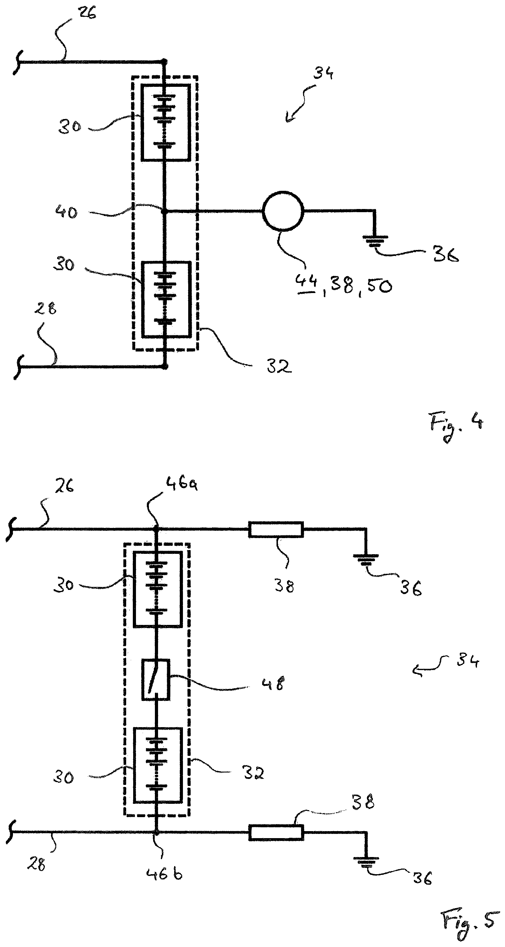

Das Ausführungsbeispiel der Fig. 4 zeigt ein Schutzsystem 34, bei welchem die Kontaktstelle 40 mit einem Spannungsmesser 42 an das Bezugspotential 36 geführt ist. In diesem Ausführungsbeispiel wirkt der insbesondere hochohmige Innen- oder Messwiderstand des Spannungsmessers 42 als ein Isolationswiderstand. Mit anderen Worten ist der Widerstand 38 im Wesentlichen in den Spannungsmesser 42 integriert.

In der Fig. 5 ist ein Schutzsystem 34 dargestellt, welches mittels zweier Kontaktstellen 46a, 46b an den Gleichspannungskreis gekoppelt ist. Die Kontaktstelle 46a ist plusseitig und die Kontaktstelle 46b ist minusseitig an den Speicherstrang 32 angeschlossen. Mit anderen Worten sind die Kontaktstellen 46a und 46b an den entgegengesetzten Anschlusskontakten des Speicherstrangs 32 angeordnet. Die Kontaktstellen 46a, 46b sind hierbei mittels jeweils eines Widerstands 38 an das Bezugspotential 36 geführt. In dem Ausführungsbeispiel der Fig. 5 ist weiterhin ein Schutzschalter 48 in der Reihenschaltung des Speicherstrangs 32 vorgesehen. Der beispielsweise als Schmelzsicherung ausgeführte Schutzschalter 48 ist zwischen den beiden Speichermodulen 30 des Speicherstrangs 32 zu diesen in Reihe geschaltet.

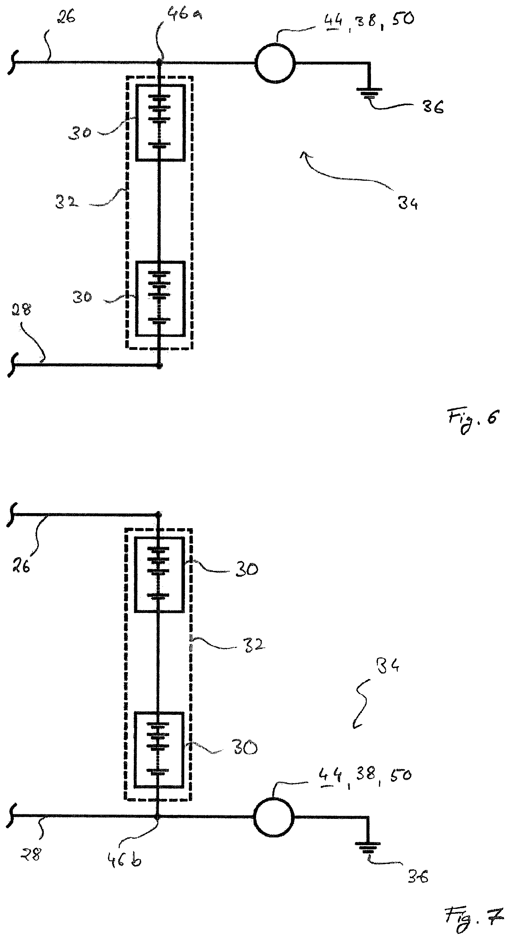

Die Fig. 6 und die Fig. 7 zeigen Ausführungsbeispiele des Schutzsystems 34, bei welchen die Kontaktstellen 46a beziehungsweise 46b mit einem Spannungsmesser 42 an das Bezugspotential 36 geführt sind. Ebenso denkbar ist hierbei, dass die Speicherstränge 32 eine Anzahl von Speichermodulen 30 aufweisen.

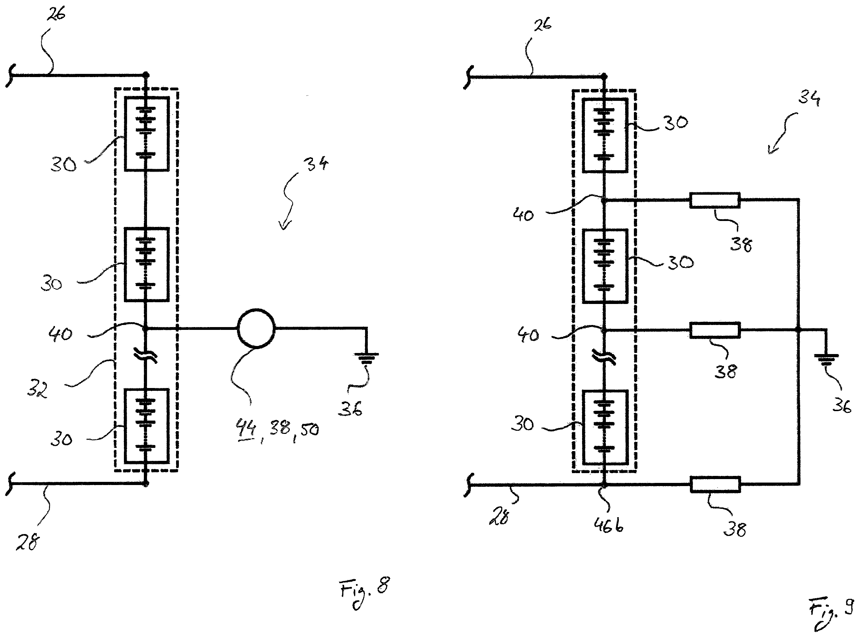

Die Ausführungsbeispiele der Figuren 8 bis 10 zeigen jeweils Speicherstränge 32 mit einer Anzahl von in Reihe geschalteten Speichermodulen 30.

In dem in der Fig. 8 dargestelltem Ausführungsbeispiel ist die Kontaktstelle 40 außermittig im Reihenverbund des Speicherstrangs 32 angeordnet. Die Kontaktstelle 40 ist hierbei - ausgehend von dem pulsseitigen Anschluss des Speicherstrangs 32 - hinter dem in Reihenrichtung zweiten Speichermodul 30 angeordnet. Die Kontaktstelle 40 ist über einen Spannungsmesser 42 an das Bezugspotential 36 geführt.

Das in der Fig. 9 dargestellte Schutzsystem 34 weist drei parallel geschaltete Widerstände 38 auf, welche mittels zweier Kontaktstellen 40 des Speicherstrangs 32 sowie einer Kontaktstelle 46b des Minuspfades 28 mit dem Bezugspotential 36 gekoppelt sind. Die Kontaktstellen 40 des Speicherstranges sind entlang der Reihenrichtung ausgehend von dem plusseitigen Anschluss hinter dem ersten und zweiten Speichermodul 30 angeordnet. Der Anschluss an das Bezugspotential 36 entfällt in einer möglichen alternativen Ausführungsform.

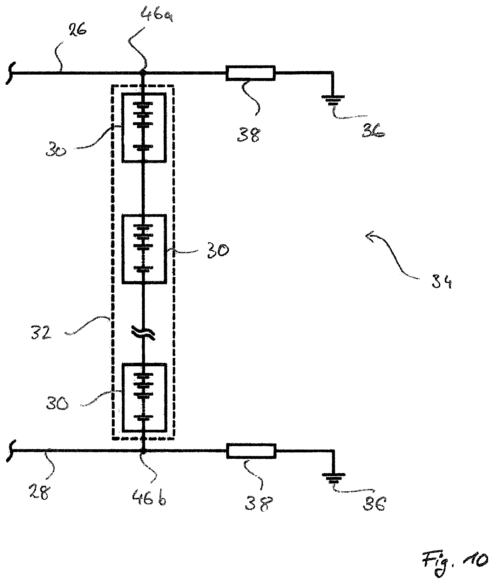

Die Fig. 10 zeigt ein Ausführungsbeispiel des Schutzsystems 34, bei welchen jeweils ein Widerstand 38 an die plus- und minusseitige Kontaktstelle 46a und 46b angeschlossen ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

So ist beispielsweise anstelle eines Spannungsmessers 42 auch der Einsatz eines Strommessers 50 denkbar, wobei entsprechend die Energiequelle 44 vorzugsweise als ein Stromquellenregler ausgebildet ist. Ebenso denkbar ist weiterhin die Verwendung des Batteriespeichersystem 4 als Speichersystem für eine Windkraftanlage.

Wesentlich ist, dass ein Schutzsystem 34 für Speichermodule (Batterien, Akkumulatoren) 30 erzeugt wird, mit welchem ein betriebssicheres Batteriespeichersystem 4 insbesondere für den Niedergleichspannungsbereich zwischen -1500 V (DC) und +1500 V (DC) realisierbar ist. Das Batteriespeichersystem 4 ist für einen modularen Aufbau aus einzelnen, elektrochemischen Speichermodulen 30 ausgelegt, wobei sowohl Speichermodule 30 in einer Erstverwendung (First Life) als auch Speichermodule 30 in einer Zweit- oder Weiterverwendung (Second Life) verwendbar sind. Die zugelassenen (Gleich-)Spannungen der einzelnen Speichermodule 30 sind hierbei kleiner als die zu realisierende System- beziehungsweise Betriebsspannung (Niedergleichspannung).

Das Batteriespeichersystem 4 zeichnet sich im Vergleich zu anderen Speichertechnologien, wie beispielsweise Pumpenspeicherkraftwerke, durch besonders niedrige Einschaltzeiten aus. Dieser Vorteil entsteht dadurch, dass die Speichermodule 30 nicht von einer mechanischen Energie abhängig sind. Das Batteriespeichersystem 4 weist weiterhin einen geringen Bauraum- oder Stellflächenbedarf auf. Des Weiteren ist das Batteriespeichersystem 4 im Wesentlichen ortsunabhängig einsetzbar. Beispielsweise ist das Batteriespeichersystem 4 mittels eines Lüftungs- oder Kühlungssystems bedarfsweise erwärmbar beziehungsweise entwärmbar, sodass der modulare Aufbau mit den Speichermodule 30 im Wesentlichen in allen Regionen der Welt einsetzbar ist.

Das erfindungsgemäße Schutzsystem 34 ermöglicht es auf einfache und vorteilhafte Weise, Speichermodule 30 in einem Batteriespeichersystem 4 zu betreiben und einzusetzen, deren zulässige (Einzel-)Spannung geringer ist, als die zu realisierende Betriebsspannung. Hierbei sind die Materialien und/oder Technologien auf denen die einzelnen Speichermodule 30 basieren nicht relevant, und können von Speichermodul 30 zu Speichermodul 30 unterschiedlich sein.

Mit dem (Erdpotential-)Schutzsystem 34 ist es möglich, die in Reihe geschalteten Speichermodule 30 mit einer Niedergleichspannung 1500 V (DC) und +1500 V (DC) zu betreiben. Die Speichermodule 30 sind hierbei durch das Schutzsystem 34 je nach zulässiger Anforderung auf das positive oder negative Potential gegenüber dem Bezugspotential 36 verschiebbar.

Hierzu wird die an der hochohmigen Kontaktierung abfallende Spannung permanent durch mindestens einen Spannungsmesser 42 (oder Strommesser 50) überwacht. Im Stör- oder Fehlerfall wird das Batteriespeichersystem 4 mit dem Schutzsystem 34 schnell abgeschaltet. Durch das Einbringen der Kontaktierung der Betriebsspannung (Betriebspotential) mit dem Bezugspotential 36 und der Spannungs- oder Stromüberwachung sind Stör- oder Fehlerfälle schnell und einfach detektierbar. Durch das Einbringen von Schutzschaltern 48 ist der jeweilige Speicherstrang 32 weiterhin schnell und sicher trennbar.

Wird eine Potentialverschiebung, das bedeutet eine Änderung des Spannungsabfalls an dem Widerstand 38, detektiert, bedeutet dies, dass eine zulässige Spannung an einem der Speichermodule 30 überschritten wurde. Dieser Potentialverschiebungsbereich, beziehungsweise der diesem zugeordnete Schwellwert im Controller der Energiequelle 44, ist an den jeweiligen Zulassungsbereich der Speichermodule 30 angepasst. Durch die steuer- oder regelbare Energiequelle 44 ist das Bezugspotential 36 derart anpassbar, dass im Falle einer Potentialverschiebung, die Spannung im Bezugs- oder Erdungspunkt wieder in den zulässigen Verschiebungsbereich eingestellt wird.

Insbesondere zu der Fig. 2 sei angemerkt, dass mit der hochohmigen Kontaktierung (Widerstand 38) der Erdungspunkt festgelegt wird. Dadurch wird die gesamte Spannung des Niedergleichspannungssystems, insbesondere des Speicherstrangs, auf die in Reihe geschalteten Speichermodule (Batterien/ Ackumulatoren) aufgeteilt. Der Vorteil besteht darin, dass an keine der Speichermodule mehr als die zulässige Spannung abfallen wird. Das Bezugspotential wird ständig durch die Spannungsmessung überwacht. Die Spannungsmessung ermöglicht ein schnelles Detektieren der Potenzialverschiebung, woraufhin optional Stromquellen-/ Spannungsquellenregler (Energiequelle 44) die Potentialverschiebung wieder ausregelt. Eine weitere Schutzmaßnahme kann in der Einbringung mindestens eines Schutzes (Schutzschalters 48) zwischen den in Reihe geschalteten Speichermodulen bestehen. Der Schutz gewährleistet eine sichere Abschaltung im Falle einer Störung. Statt der Anschlussquelle der DC-Quelle (Anschlüsse 22a, 22b) ist das Niedergleichspannungssystem einen Wechselrichter mit oder ohne Transformator, einen Gleichrichter mit oder ohne Transformator, einen Thyristor (mehrere Thyristoren), einen MOSFET (mehrere MOSFETs), weitere Gleichspannungsquellen oder Gleichspannungsverbraucher oder ein Schaltnetzteil angeschlossen.

Das Batteriespeichersystem ist insbesondere dadurch gekennzeichnet, dass in Reihe geschaltete Speichermodulen mit Systemspannungen von (-) 1500 bis (+) 1500V betrieben werden können, wobei die einzelnen Speichermodule lediglich für kleine Spannungen geprüft oder zugelassen sind. Die Speichermodule können dabei aus beliebigen Anwendungsbereichen und beliebigen Technologiebereichen stammen.

Beispielsweise ist eine hochohmige Erdung inklusive einer Spannungsüberwachung und/oder einer aktiver Stromquelle bzw. Spannungsquelle inkl. Spannungsüberwachung mit dem Speicherstrang elektrisch kontaktiert. Dadurch werden die erlaubten oder zugelassenen Betriebsspannungen der einzelnen Speichermodule nicht überschritten. Das Batteriespeichersystem umfasst einen optionalen Trennschalter (Schutzschalter), welcher im Fehlerfall den Speicherstrang auftrennt. Insbesondere wird hierdurch ebenfalls ein Schutz der im Batteriespeichersystem etwaig verbauten Aktoren/ Sensoren und Kommunikationsanbindungen gewährleistet.

### Bezugszeichenliste

- 2: Photovoltaik-Anlage
- 4: Batteriespeichersystem
- 6: Photovoltaikgenerator
- 8: Wechselrichter
- 10: Hauptpfad
- 12: Rückführpfad
- 14: Netz
- 16: Photovoltaikmodul
- 18: Generatoranschlusskasten
- 20: Trennelement
- 22a, 22b: Anschluss
- 24: Gleichspannungskreis
- 26: Pluspfad
- 28: Minuspfad
- 30: Speichermodul bzw. Batteriepack
- 32: Speicherstrang
- 34: Schutzsystem
- 36: Bezugspotential
- 38: Widerstand
- 40: Kontaktstelle
- 42: Spannungsmesser
- 44: Energiequelle/Energieregelquelle
- 46a, 46b: Kontaktstelle
- 48: Schutzschalter
- 50: Strommesser

## Patentansprüche

1. Batteriespeichersystem (4) mit mindestens zwei in Serie zu einem Serienstrang verschalteten elektrischen Speichermodulen (30), welches elektrisch mit einem Wechselrichter (8) verbunden ist, der auf seiner Wechselspannungsseite mit einem Wechselstromnetz (14) verbunden ist, wobei jedes Speichermodul (30)
- mehrere Batteriezellen, die in Serie verschaltet sind, beinhaltet;
- eine Nennkapazität von mindestens 10 kWh aufweist;
- ein äußeres Metallgehäuse hat, aus dem ein Plusanschlusspol und ein Minusanschlusspol zum Anschluss des Speichermoduls (30) herausgeführt sind;
- zwischen den Batteriezellen und dem Plusanschlusspol einen plusseitigen Trennschalter oder eine plusseitige Sicherung aufweist und zwischen den Batteriezellen und dem Minusanschlusspol einen minusseitigen Trennschalter oder eine minusseitige Sicherung aufweist;
- und eine Datenerfassungseinrichtung zur Registrierung von mindestens einer Temperatur im Inneren des Metallgehäuses und zur Messung von mindestens einer Spannung an mindestens einer vorbestimmten Stelle in dem Speichermodul (30) aufweist, und die gewonnenen Temperatur- und Spannungsdaten zur Auswertung bereitstellt,
wobei der registrierte und bereitgestellte Temperaturwert im Inneren des Metallgehäuses dazu herangezogen wird, das Innere des Speichermoduls (30) durch eine aktive Maßnahme zu kühlen oder zu erwärmen,
wobei eine Steuervorrichtung vorgesehen ist, die in Kenntnis der aktuellen und/oder prognostizierten Wechselrichterleistung die Maßnahme einleitet, bevor der gemessene Temperaturwert dieses fordert.

2. Batteriespeichersystem (4) nach Anspruch 1, **dadurch gekennzeichnet, dass** die vorbestimmte Stelle an dem Plus- und/oder dem Minusanschlusspol des Speichermoduls (30) oder an der elektrischen Verbindung zwischen zwei Batteriezellen liegt.

3. Batteriespeichersystem (4) nach Anspruch 1 oder 2, **dadurch gekennzeichnet, dass** eine Steuervorrichtung vorgesehen und dazu eingerichtet ist, dass von den Trennschaltern in den Speichermodulen (30) der- oder diejenigen als erstes angesteuert werden, deren Potentialdifferenz zum Bezugspotential kleiner ist als die von anderen Trennschaltern im selben Serienstrang, vorzugsweise dass eine ungerade Anzahl an Speichermodulen pro Serienstrang verbaut ist, und ein Trennschalter des mittleren Speichermoduls aktiviert wird.

4. Batteriespeichersystem (4) nach einem der Ansprüche 1 bis 3, **dadurch gekennzeichnet, dass** parallel zu dem in Serie geschalteten Speichermodulen (30) ein Entlastungsstrang verschaltet ist, der mindestens eines der folgenden Bauelemente enthält: mehrere Batteriezellen, mehrere Kondensatoren, in Serie geschaltete Speichermodule (30), eine rotierende Masse.

5. Batteriespeichersystem (4) nach einem der Ansprüche 1 bis 4, **dadurch gekennzeichnet, dass** ein Bezugspotential, insbesondere ein Massepotential, direkt gegen eine zwischen zwei Speichermodulen (30) angeordnete Kontaktstelle des Serienstrangs geführt ist und/oder dass ein Bezugspotential, insbesondere ein Massepotential, unter Zwischenschaltung einer Kleinspannungsquelle gegen eine zwischen zwei Speichermodulen (30) angeordnete Kontaktstelle des Serienstrangs geführt ist.

6. Batteriespeichersystem (4) nach einem der Ansprüche 1 bis 4, **dadurch gekennzeichnet, dass** an beliebiger Stelle des Serienstrangs eine Spannungsquelle angeschlossen ist, die ihrerseits mit dem Bezugspotential verbunden ist.

7. Batteriespeichersystem (4) nach einem der Ansprüche 1 bis 6, **dadurch gekennzeichnet, dass** zwischen dem Metallgehäuse und dem Bezugspotential, insbesondere dem Masse- oder Erdpotential, eine Spannungsquelle elektrisch angebunden ist, welche das Potential des Metallgehäuses um mehr als 100 Volt gegen das Bezugspotential verschiebt.

8. Batteriespeichersystem (4) nach einem der Ansprüche 1 bis 6, **dadurch gekennzeichnet, dass** im Falle eines Potentials des Gehäuses oberhalb des Bezugspotentials, zwischen dem Metallgehäuse und dem Plusanschlusspol oder einer Kontaktstelle derselben Spannung ein Widerstand elektrisch angebunden ist, welcher das Potential des Metallgehäuses gegenüber dem Bezugspotential dem Betrage nach anhebt oder dass im Falle eines Potentials des Gehäuses unterhalb des Bezugspotentials, zwischen dem Metallgehäuse und dem Minusanschlusspol oder einer Kontaktstelle derselben Spannung ein Widerstand elektrisch angebunden ist, welcher das Potential des Metallgehäuses gegenüber dem Bezugspotential dem Betrage nach anhebt.

9. Batteriespeichersystem (4) nach Anspruch 8, **dadurch gekennzeichnet, dass** der Widerstand in seinem Wert von einer Regeleinrichtung einstellbar ist, um die Spannung des Gehäuses zum Bezugspotential auf einen vorgebbaren Wert oder innerhalb eines vorgegebenen Bereichs einzustellen.

10. Batteriespeichersystem (4) nach einem der Ansprüche 1 bis 6, **dadurch gekennzeichnet, dass** sich zwischen dem Neutralleiter bzw. N-Pol des Wechselrichters und dem Bezugspotential eine wechselstromseitige Kleinspannungsquelle oder ein elektrischer Widerstand befindet.

11. Batteriespeichersystem (4) nach Anspruch 1, **dadurch gekennzeichnet, dass** die Maßnahme eines der folgenden Merkmale aufweist: Betrieb eines Ventilators, Betrieb einer Pumpe, Ansteuern eines Ventils, ein Speichervolumen für ein warmes oder kaltes Fluid.

12. Batteriespeichermodul, in dem Batteriespeichersystem (4) nach einem der Ansprüche 1 bis 11, **dadurch gekennzeichnet, dass** es
- mehrere Batteriezellen, die in Serie verschaltet sind, beinhaltet;
- eine Nennkapazität von mindestens 10 kWh aufweist;
- ein äußeres Metallgehäuse hat, aus dem ein Plusanschlusspol und ein Minusanschlusspol zum Anschluss des Speichermoduls herausgeführt sind;
- eine Datenerfassungseinrichtung zur Registrierung von mindestens einer Temperatur im Inneren des Metallgehäuses und zur Messung von mindestens einer Spannung an einer vorbestimmten Stelle in dem Speichermodul aufweist, und die gewonnenen Temperatur- und Spannungsdaten zur Auswertung bereitstellt; und
- zwischen zwei Batteriezellen einen Zwischenpol besitzt, der
- direkt
- direkt mit Zwischensicherung
- direkt mit Zwischensicherung und Zwischen-schalter;
entweder mit dem Metallgehäuse oder mit dem Bezugspotential, insbesondere dem Masse-Erdpotential elektrisch verbunden ist.

## Claims

1. A battery storage system (4) having at least two electrical storage modules (30) connected in series to form a series strand, said battery storage system being electrically connected to an inverter (8), which is connected on its AC voltage side to an AC network (14), wherein each storage module (30)
- contains a plurality of battery cells that are connected in series;
- has a nominal capacity of at least 10 kWh;
- has an outer metal housing, out of which a positive connection pole and a negative connection pole are guided for connecting the storage module (30);
- has a positive-side circuit breaker or positive-side fuse between the battery cells and the positive connection pole and has a negative-side circuit breaker or a negative-side fuse between the battery cells and the negative connection pole;
- and has a data acquisition device for registering at least one temperature inside the metal housing and for measuring at least one voltage at at least one predetermined location in the storage module (30), and provides the obtained temperature and voltage data for evaluation,
wherein the registered and provided temperature value inside the metal housing is used to cool or heat the inside of the storage module (30) by means of an active measure,
wherein a control device is provided which, knowing the current and/or forecast inverter output, initiates the measure before the measured temperature value demands said measure.

2. The battery storage system (4) according to claim 1, **characterised in that** the predetermined location is on the positive and/or negative connection pole of the storage module (30) or on the electrical connection between two battery cells.

3. The battery storage system (4) according to claim 1 or 2, **characterised in that** a control device is provided and is configured such that the isolating switches in the storage modules (30) are used to control those whose potential difference to the reference potential is smaller than that of other isolating switches in the same series strand, preferably that an odd number of storage modules is installed per series strand, and an isolating switch of the middle storage module is activated.

4. The battery storage system (4) according to any one of claims 1 to 3, **characterised in that** a relief strand is connected in parallel with the storage modules (30) that are connected in series and contains at least one of the following components: a plurality of battery cells, a plurality of capacitors, storage modules connected in series (30), a rotating mass.

5. The battery storage system (4) according to any one of claims 1 to 4, **characterised in that** a reference potential, in particular a ground potential, is guided directly against a contact point of the series strand arranged between two storage modules (30) and/or **in that** a reference potential, in particular a ground potential, is guided, by means of a low voltage source, against a contact point of the series strand arranged between two storage modules (30).

6. The battery storage system (4) according to any one of claims 1 to 4, **characterised in that** a voltage source is connected at any point in the series strand, said voltage source in turn being connected to the reference potential.

7. The battery storage system (4) according to any one of claims 1 to 6, **characterised in that** between the metal housing and the reference potential, in particular the ground or earth potential, a voltage source is electrically connected, which shifts the potential of the metal housing by more than 100 volts against the reference potential.

8. The battery storage system (4) according to any one of claims 1 to 6, **characterised in that**, in the event of a potential of the housing above the reference potential, between the metal housing and the positive connection pole or a contact point of the same voltage, a resistor is electrically connected, which increases the potential of the metal housing compared to the reference potential by the amount, or **in that**, in the event of a potential of the housing below the reference potential, a resistor is electrically connected between the metal housing and the negative connection pole or a contact point of the same voltage, which increases the potential of the metal housing compared to the reference potential by the amount.

9. The battery storage system (4) according to claim 8, **characterised in that** the value of the resistor is adjustable by a control device in order to set the voltage of the housing to the reference potential to a predeterminable value or within a predetermined range.

10. The battery storage system (4) according to any one of claims 1 to 6, **characterised in that** there is an AC-side low-voltage source or an electrical resistor between the neutral conductor or N-pole of the inverter and the reference potential.

11. The battery storage system (4) according to claim 1, **characterised in that** the measure has one of the following features: operation of a fan, operation of a pump, actuation of a valve, a storage volume for a warm or cold fluid.

12. A battery storage module, in the battery storage system (4)
according to any one of claims 1 to 11, **characterised in that** it
- contains a plurality of battery cells that are connected in series;
- has a nominal capacity of at least 10 kWh;
- has an outer metal housing, out of which a positive connection pole and a negative connection pole are guided for connecting the storage module;
- has a data acquisition device for registering at least one temperature inside the metal housing and for measuring at least one voltage at one predetermined location in the storage module, and provides the obtained temperature and voltage data for evaluation; and
- has an intermediate pole between two battery cells, which is
- directly connected
- directly connected with intermediate fusing
- directly connected with intermediate fusing and intermediate switch;
electrically connected either to the metal housing or to the reference potential, in particular the ground-earth potential.

## Revendications

1. Système de stockage par batterie (4) comportant au moins deux modules de stockage (30) électrique raccordés en série pour former une branche en série, lequel est raccordé électriquement à un onduleur (8), lequel est raccordé côté tension alternative à un réseau à tension alternative (14), dans lequel chaque module de stockage (30)
- comporte plusieurs éléments de batterie raccordés en série ;
- comporte une capacité nominale d'au moins 10 kWh ;
- comporte un boîtier métallique extérieur, hors duquel un pôle de raccordement positif et un pôle de raccordement négatif sont guidés pour raccorder le module de stockage (30) ;
- comporte, entre les éléments de batterie et le pôle de raccordement positif, un sectionneur côté positif ou un fusible côté positif et comporte, entre les éléments de batterie et le pôle de raccordement négatif, un sectionneur côté négatif ou un fusible côté négatif ;
- et comporte un dispositif d'acquisition de données pour enregistrer au moins une température à l'intérieur du boîtier métallique et pour mesurer au moins une tension à au moins un point prédéterminé dans le module de stockage (30) et met à disposition les données de température et de tension obtenues pour une évaluation,
dans lequel la valeur de température, enregistrée et mise à disposition, à l'intérieur du boîtier métallique, est utilisée pour refroidir ou chauffer l'intérieur du module de stockage (30) au moyen d'une mesure active,
dans lequel un dispositif de commande est prévu, qui lance, vu la puissance actuelle et/ou prévue de l'onduleur, la mesure avant que la valeur de température mesurée ne l'exige.

2. Système de stockage par batterie (4) selon la revendication 1, **caractérisé en ce que** le point prédéterminé se trouve sur le pôle de raccordement positif et/ou négatif du module de stockage (30) ou sur le raccordement électrique entre deux éléments de batterie.

3. Système de stockage par batterie (4) selon la revendication 1 ou 2, **caractérisé en ce qu'**un dispositif de commande est prévu, conçu de telle sorte que, parmi les sectionneurs dans les modules de stockage (30) un ou plusieurs soient commandés en premier, dont la différence de potentiel, par rapport au potentiel de référence, est inférieure à celle des autres sectionneurs dans la même branche en série, de préférence qu'un nombre impair de modules de stockage est monté par branche en série et un sectionneur du module de stockage central est activé.

4. Système de stockage par batterie (4) selon l'une quelconque des revendications 1 à 3, **caractérisé en ce que**, en parallèle avec les modules de stockage (30) raccordés en série, une branche de décharge est raccordée et comporte au moins l'un des composants suivants : plusieurs éléments de batterie, plusieurs condensateurs, module de stockage raccordés en série (30), une masse en rotation.

5. Système de stockage par batterie (4) selon l'une quelconque des revendications 1 à 4, **caractérisé en ce qu'**un potentiel de référence, en particulier un potentiel de masse, est guidé directement contre un point de contact de la branche en série disposé entre deux modules de stockage (30) et/ou qu'un potentiel de référence, en particulier un potentiel de masse, par interposition d'une source basse tension, est guidé contre un point de contact de la branche en série disposé entre deux modules de stockage (30).

6. Système de stockage par batterie (4) selon l'une quelconque des revendications 1 à 4, **caractérisé en ce qu'**une source de tension est raccordée à des points quelconques de la branche en série, laquelle est raccordée au potentiel de référence.

7. Système de stockage par batterie (4) selon l'une quelconque des revendications 1 à 6, **caractérisé en ce que**, entre le boîtier métallique et le potentiel de référence, en particulier le potentiel de masse ou de terre, une source de tension est raccordée électriquement, laquelle diffère le potentiel du boîtier métallique de plus de 100 volts par rapport au potentiel de référence.

8. Système de stockage par batterie (4) selon l'une quelconque des revendications 1 à 6, **caractérisé en ce que**, en cas de potentiel du boîtier supérieur au potentiel de référence, entre le boîtier métallique et le pôle de raccordement positif ou un point de contact de même tension, une résistance est raccordée électriquement, laquelle augmente la valeur du potentiel du boîtier métallique par rapport au potentiel de référence ou que, en cas de potentiel du boîtier inférieur au potentiel de référence, entre le boîtier métallique et le pôle de raccordement négatif ou un point de contact de même tension, une résistance est raccordée électriquement, laquelle augmente la valeur du potentiel du boîtier métallique par rapport au potentiel de référence.

9. Système de stockage par batterie (4) selon la revendication 8, **caractérisé en ce que** la valeur de la résistance est réglable par un dispositif de régulation pour régler la tension du boîtier par rapport au potentiel de référence à une valeur pouvant être prédéterminée ou au sein d'une plage prédéterminée.

10. Système de stockage par batterie (4) selon l'une quelconque des revendications 1 à 6, **caractérisé en ce que**, entre le conducteur neutre ou le pôle N de l'onduleur et le potentiel de référence, une source basse tension côté courant alternatif ou une résistance électrique est disposée.

11. Système de stockage par batterie (4) selon la revendication 1, **caractérisé en ce que** la mesure comporte l'une des caractéristiques suivantes : un fonctionnement d'un ventilateur, un fonctionnement d'une pompe, un actionnement d'une soupape, un volume de stockage pour un fluide chaud ou froid.

12. Module de stockage par batterie, dans le système de stockage par batterie (4) selon l'une quelconque des revendications 1 à 11, **caractérisé en ce qu'**il
- comporte plusieurs éléments de batterie raccordés en série ;
- comporte une capacité nominale d'au moins 10 kWh ;
- comporte un boîtier métallique extérieur, hors duquel un pôle de raccordement positif et un pôle de raccordement négatif sont guidés pour raccorder le module de stockage ;
- comporte un dispositif d'acquisition de données pour enregistrer au moins une température à l'intérieur du boîtier métallique et pour mesurer au moins une tension à un emplacement prédéterminé dans le module de stockage et met à disposition les données de température et de tension obtenues pour une évaluation ; et
- comporte un pôle intermédiaire entre deux éléments de batterie, lequel est raccordé électriquement
- directement
- directement avec un fusible intermédiaire
- directement avec un fusible intermédiaire et un interrupteur intermédiaire ;
soit au boîtier métallique, soit au potentiel de référence, en particulier au potentiel de masse ou de terre.
